# EUROPÄISCHE PATENTSCHRIFT

(11) **EP 2 717 035 B1**
(45) Veröffentlichungstag und Bekanntmachung des Hinweises auf die Patenterteilung: **07.12.2016**
(21) Anmeldenummer: 13004627.9
(22) Anmeldetag: 24.09.2013
(51) Int. Cl.: G01N 21/27, G01N 21/53, G01N 15/02, G01N 15/14

(54) **Verfahren und Vorrichtung zum Untersuchen kleiner Partikel in Gas**
Method and apparatus for investigating small particles in gas
Procédé et dispositif d'analyse de petites particules en phase gazeuse

(30) Priorität: 02.10.2012 DE 102012019383; 11.10.2012 DE 102012019926
(43) Veröffentlichungstag der Anmeldung: 09.04.2014
(73) Patentinhaber: Palas GmbH Partikel-und Lasermesstechnik, 76229 Karlsruhe (DE)
(72) Erfinder: Weiß, Maximilian, D-76356 Weingarten (DE); Mölter, Leander, D-76744 Wörth am Rhein (DE)
(74) Vertreter: Lichti - Patentanwälte Partnerschaft mbB

(56) Entgegenhaltungen:
- WO-A1-2009/021123
- US-A1- 2004 011 975

## Beschreibung

Die Erfindung betrifft Verfahren und eine Vorrichtung zum Untersuchen kleiner Partikel in Gas gemäß des Anspruchs 1 bzw. des Anspruchs 9.

Eine gattungsgemäße Vorrichtung ist als Feinstaub-Emissions-Monitorsystem und Aerosolspektrometer bekannt und erlaubt die kontinuierliche und gleichzeitige Erfassung der Konzentration von Partikeln in Gas (ihre Zahl in einem vorgegebenen Raumvolumen), insbesondere Luft, über die Partikelgröße und damit die Erfassung charakteristischer Werte, wie PM_{2,5} und PM₁₀.

Derartige bekannte Vorrichtungen beruhen auf dem Prinzip der optischen Lichtstreuung und weisen eine Lichtquelle mit hoher Lichtstabilität auf, insbesondere als LED-Lichtquelle mit hoher Lebensdauer. Die Partikel tragende Luft wird über einen Probennahmekopf durch ein Proberohr geführt, in welchem die Probe regelmäßig sowie durch das Licht unter einem endlichen Winkel zur Strömungsrichtung des Mediums, in der Regel senkrecht hierzu, bestrahlt wird und Streulicht unter einem endlichen Winkel (also ungleich 0°), wie vorzugsweise zwischen 10° und 170°, vorzugsweise im Bereich von 80° bis 100° zur Einstrahlrichtung des Lichts detektiert wird.

Der Aerosolsensor ist ein optisches Aerosolspektrometer, welches über Streulichtanalyse am Einzelpartikel die Partikelgröße bestimmt.

Mittels Gas/Luft aus der Umgebung absaugenden Pumpe wird ein definierter Gasvolumenstrom erzeugt (im Bereich von 1,2 dm³/min bis 2,3 m³/h). Die Partikel bewegen sich einzeln durch ein optisch abgegrenztes Messvolumen, das homogen ausgeleuchtet wird. Von jedem einzelnen Partikel entsteht ein Streulichtimpuls, der unter dem genannten Winkel erfasst wird. Die Partikelanzahl wird anhand der Anzahl der Streulichtimpulse gemessen. Die Partikelkonzentration (z.B. Partikel/cm³) berechnet sich aus dem gemessenen Partikelstrom bezogen auf den bekannten Volumenstrom (z.B. m³/sec). Die Höhe der Streulichtimpulse ist ein Maß für den Partikeldurchmesser.

Demgemäß wird jeder Streulichtimpuls erfasst und hinsichtlich seiner Intensität einer Teilchengröße zugeordnet, wobei bei einem digitalen Messsystem die Teilchengrößen einer

Vielzahl von Kanälen, beispielsweise 256 Kanälen, klassifiziert werden.

Derartige Vorrichtungen können weiterhin Trockenstrecken sowie Sensoren zur Erfassung von Temperatur, Luftdruck und relativer Feuchte aufweisen, um so eine Verfälschung von Messergebnissen durch Kondensationseffekte auszuschließen. Dabei erfolgt eine feuchte Kompensation in Abhängigkeit von der relativen Luftfeuchte und Außentemperatur.

Eine derartige Vorrichtung zur Erfassung der Partikelanzahlkonzentration arbeitet zuverlässig und zufriedenstellend. Allerdings kann die Innenwandung des Probenrohres, durch welches das zu untersuchende partikelbelastete Gas strömt durch Ablagerung von Partikeln verschmutzen und sich eintrüben, so dass hierdurch die Messeinrichtung dekalibriert wird. Das heißt, dass durch die hierdurch bedingte Schwächung der Streustrahlung in einem Messkanal, der für einen bestimmten Teilchengrößenbereich vorgesehen ist, tatsächlich kleinere Partikel gezählt werden.

Die WO 2009/021123 A1 offenbart eine Vorrichtung und ein Verfahren zum Messen der Massenkonzentration von Partikeln in einem Aerosol in Abhängigkeit von deren Größe. Dies geschieht in Echtzeit und mittels eines einzigen Detektors. Elektromagnetische Strahlung wird auf ein in einer Leitung strömendes Aerosol gelenkt. In diesem Aerosol befinden sich die zu messenden Partikel. Ein Detektor erfasst die durch die Partikel gestreute Strahlung. Er wandelt das erfasste Signal in ein elektrisches Signal und analysiert dieses um die Masseverteilung und die Größe der sich im Aerosol befindlichen Partikel zu bestimmen. Zur Vermeidung einer Dekalibrierung des Sensors durch sich ablagernde Partikel wird ein Teil des Aerosolstroms abgezweigt und durch einen Filter gelenkt. Der gefilterte Teil des abgeleiteten Aerosolstroms wird wieder zum partikeltragenden Aerosol geführt und bildet einen partikelfreien Gasstrom um das partikeltragende Aerosol herum. Nachteilig dabei ist, dass eine gegebenenfalls vorhandene Dekalibrierung des Sensors nicht erfasst wird. Die Verwendung eines gefilterten Gasstroms geht mit einem hohen Aufwand an Material und Kosten einher. Mangels einer Überprüfung der Dekalibrierung des Sensors ist die Effektivität des partikelfreien Gasstroms unter diesem Aspekt fraglich. Dies gilt umso mehr als eine Dekalibrierung auch durch eine Alterung des Detektors (z.B. Photomultiplier oder Transmission der eingesetzten Optiken) und der Auswerteelektronik sowie insbesondere durch eine Alterung der Lichtquelle erfolgen kann. Alle diese Alterungseffekte führen zu einer Signalabschwächung und dadurch zu einer Dekalibrierung des Messsystems.

Die US 2004/0011975 A1 beinhaltet eine Vorrichtung und ein Verfahren zur Bestimmung von Partikelgrößen in einer Suspension, also einer teilchenbeladenen Flüssigkeit. Dabei wird Licht einer Lichtquelle mittels einer Optik auf einen speziellen Bereich der Flüssigkeit gerichtet. In Ausbreitungsrichtung des Lichts ist hinter der Flüssigkeit ein Detektor angebracht, der die einfallende Strahlung in Transmission misst. Das empfangene Lichtsignal wird in ein elektrisches Signal umgewandelt, aus dem sich eine Verteilung von Pulshöhen ergibt. Diese werden mittels mathematischer Faltungsmethoden in eine Größenverteilung der sich im Bereich des Fluids befindlichen Partikel umgerechnet. Um bei Durchführung der Messung mit einer trüben Trägerflüssigkeit die Trübheit dieser Flüssigkeit zu kompensieren, wird zunächst die Messung mit einer klaren Flüssigkeit, anschließend mit der trüben Flüssigkeit durchgeführt und ein Korrekturfaktor als Verhältnis der Grundspannung der ersten Messung zur zweiten Messung berechnet, mit dem das Messergebnis dann verstärkt wird. Eine Dekalibrierung des Aufbaus der Vorrichtung erfolgt nicht. Somit kann eine Beeinträchtigung der Messergebnisse durch eine über die Zeit entstehende Verschmutzung der optischen Teile nicht festgestellt werden.

Der Erfindung liegt die Aufgabe zugrunde, ein Verfahren und eine Vorrichtung der eingangs genannten Art dahingehend weiterzubilden, dass eine derartige Dekalibrierung erfasst werden kann und in geeigneter, effizienter Weise eine Rekalibrierung vorgenommen werden kann.

Erfindungsgemäß wird die Aufgabe durch ein Verfahren mit den kennzeichnenden Merkmalen des Anspruchs 1 gelöst. Eine gattungsgemäße Vorrichtung sieht zur Lösung der genannten Aufgabe erfindungsgemäß die Merkmale des Anspruchs 9 vor.

Damit sieht das Verfahren vor, dass das Auftreten einer Spitze, die hier als Mie-Peak bezeichnet wird, in der gemessenen größenabhängigen Häufigkeitsverteilung überwacht wird und bei Auftreten dieser Spitze in einem oder mehreren anderen als dem oder den ihm aufgrund der Messeinstellungen zukommenden mindestens einen digitalen Normkanal eine Meldung ausgegeben wird. Eine gattungsgemäße Vorrichtung sieht zur Lösung der genannten Aufgabe erfindungsgemäß vor, dass die Auswerteeinheit zum Erfassen einer Spitze in der gemessenen Partikelanzahlverteilung und zum Zuordnen derselben zu mindestens einem digitalen Erfassungskanal (Normalkanal) ausgebildet ist.

Das erfindungsgemäße Verfahren wird insbesondere anhand einer mittels einer gattungsgemäßen Vorrichtung erfolgten Messung durchgeführt.

Die Erfindung nutzt damit aus, dass bei Teilchen, deren Größe etwa der Lichtwellenlänge entspricht (genauer π d ~ Ä, wobei d Teilchendurchmesser, λ Lichtwellenlänge) die genauere Partikelanzahlkonzentrations-Verteilung nicht den erwarteten monotonen Abfall zeigt, sondern eine Unregelmäßigkeit in Form einer Abflachung oder einer Spitze in der Flanke der abfallenden Partikelanzahlkonzentrations-Verteilung aufgrund des Mie-Effektes, so dass hier diese Spitze, wie gesagt, als "Mie-Peak" bezeichnet wird. Erfindungsgemäß wird - automatisch - überprüft, ob diese Unregelmäßigkeit, insbesondere eine solche Spitze in der Flanke sich bei digitaler Erfassung der Partikelanzahlkonzentrationen im für den entsprechenden Teilchendurchmesser vorgesehenen Normkanal befindet oder aber in einen Kanal wandert, der an sich Partikel erfassen soll, deren Größe kleiner als die Größe (Durchmesser) und kleiner als der Bereich der Lichtwellenlänge des eingestrahlten Lichts ist. Wenn letzteres der Fall ist, so ist dies ein Indikator für eine Dekalibrierung des Systems aufgrund der oben genannten Verschmutzung, insbesondere der Optik, wie Linsen etc., woraufhin zur Rekalibrierung geeignete Maßnahmen ergriffen werden können, sei es manuell, sei es automatisch, wie in einem gewissen Bereich die Erhöhung des Verstärkungsfaktors des Analogverstärkers des Systems oder aber die Erhöhung der eingestrahlten Lichtstärke bzw. bei fortschreitender Verschmutzung und damit Dekalibrierung eine Reinigung des Probenrohres, um den Ausgangszustand wieder herzustellen.

In bevorzugter Weise wird nicht mit weißem, sondern farbigem, insbesondere auch monochromem oder schmalbandigem Licht gearbeitet, da der oben beschriebene Mie-Peak nur dann deutlich sichtbar ist. Dabei hat sich als äußerst bevorzugte Lichtfarbe blaues Licht und/oder ein Wellenlängenband von ± 100 nm, vorzugsweise ± 50 nm, um eine mittlere Wellenlänge des farbigen Lichts, wie beispielsweise 450 nm, herausgestellt. Vorzugsweise wird eine entsprechende blaue lichtemittierende Diode eingesetzt.

In weiterer bevorzugter Ausgestaltung kann vorgesehen sein, dass, wenn sich bei einem Vergleich der Partikelanzahlkonzentration in den entsprechenden Kanälen ergibt, nämlich dass im für Partikel mit einer Größe im Bereich der Lichtwellenlänge vorgesehenen Normkanal die Partikelanzahlkonzentration geringer ist als in dem unmittelbar benachbarten für kleinere Partikeldurchmesser vorgesehenen Kanal und/oder die Partikelanzahlkonzentration in diesem Kanal größer ist als die in diesem benachbarten noch kleinere Partikel vorgesehenen Kanal ein entsprechendes akustisches oder optisches Warnsignal ausgegeben wird.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:

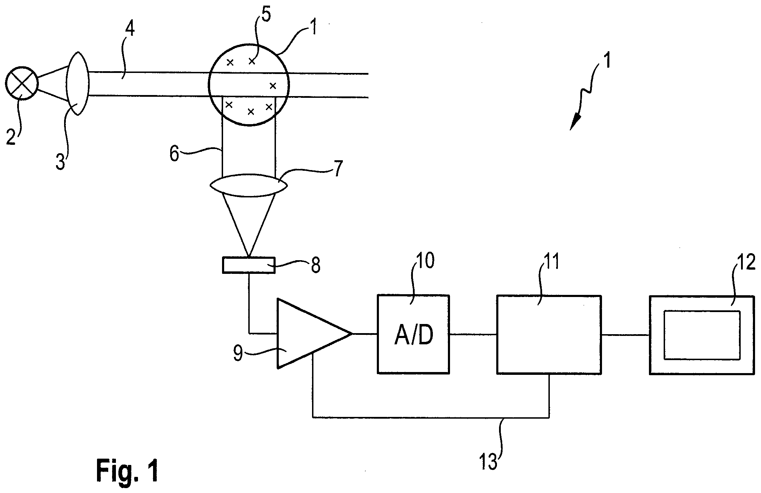

- Fig. 1: eine schematische Darstellung einer erfindungsgemäßen Vorrichtung;
- Fig. 2: eine qualitative Darstellung der Streuintensität über die Teilchengröße; und
- Fig. 3: eine qualitative Darstellung einer Feinstaubmessung mit Teilchenanzahl über die die Teilchengröße repräsentierenden Kanäle einer digitalen Erfassungseinrichtung.

Die erfindungsgemäße Vorrichtung 1 weist im Wesentlichen die folgenden Elemente auf: Ein mit einem Probenahmekopf (nicht dargestellt) verbundenes Probenahmerohr 1 wird von einer Lichtquelle 2 vorzugsweise in Form einer monochromen lichtemmitierenden Diode - LED - über eine Optik 3 (Sammellinse) durchstrahlt. Das an den Partikeln 5 im Proberohr 1 gestreute Streulicht 6 wird über eine Optik 7 (Sammellinse) durch einen Detektor 8 erfasst und Optik 7 und Detektor 8 sind auf gleicher axialer Höhe des Probenahmerohrs 1 wie die Optik 3 und die Lichtquelle 2 angeordnet. Im dargestellten Ausführungsbeispiel erfolgt die Detektion unter einem Winkel von etwa 85° bis 95° zur Richtung des einfallenden Lichtstrahls 4. Dem Detektor 8 ist ein Analogverstärker 9 nachgeordnet, dem wiederum ein Analog-Digital-Wandler 10 nachgeordnet ist. Diesem schließt sich eine Auswerteelektronik 11 und dieser wiederum eine Anzeige- und Bedieneinheit 12 an.

Weiterhin ist zwischen der Auswertelektronik 11 und dem Analogverstärker 9 ein Rückweg 13 vorgesehen, um aufgrund der in der Auswerteelektronik 11 erfolgten Auswertung eine Veränderung des Verstärkungsfaktors des Verstärkers 9 zu bewirken.

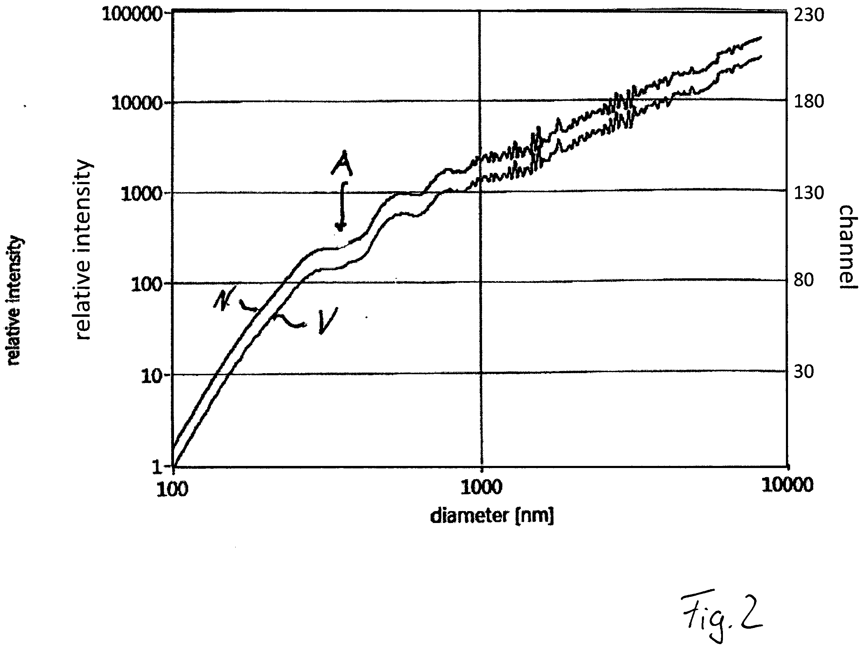

In der Fig. 2 ist qualitativ die Streuintensität der Lichtstreuung an Partikelüber die Teilchengröße nach der Mie-Theorie für die erfindungsgemäße Anordnung aufgetragen. Die Bestrahlung erfolgt dabei mit schmalbandigem Licht einer blauen lichtemittierenden Diode (LED) mit einem Mittelwert der Wellenlänge bei 450 nm (entsprechend 0,45 µm) mit einer Varianz von etwa 50 nm. Grundsätzlich können auch andere diesen Anforderungen genügende Lichtquellen, wie andersfarbige LEDs, auch mit breiterem Spektrum, oder auch Laser eingesetzt werden.

Es ist die relative Intensität (Ordinate) des an einem Partikel - bekannter Größe - gestreuten Lichts über verschiedene Partikelgrößen (Abszisse) aufgetragen. Die Erfindung des Streulichts ist im dargestellten Ausführungsbeispiel unter dem schon genannten Winkel von etwa 90° der Einstrahlrichtung bzw. im Bereich von 85° bis 95° zur Einstrahlrichtung vorgesehen.

Es ergibt sich die in der Fig. 2 dargestellte obere Intensitätskurve N. Diese weist einen steilen Anstieg bei Teilchengrößen auf, die klein gegenüber der Lichtwellenlänge von 450 mm sind. In diesem Bereich ist der Anstieg proportional zur sechsten Potenz der Partikelgröße. Bei Partikelgrößen im Bereich der Lichtwellenlänge ergibt sich aufgrund des Mie-Effekts eine verstärkte Streustrahlung in Vorwärtsrichtung, so dass unter dem genannten rechten Winkel aufgenommene Intensität der Streustrahlung sich abflacht und nicht bzw. kaum mehr ansteigt ("Mie-Plateu"). Diese Abflachung zeigt sich als Mie-Plateau. Erst bei Teilchengrößen, die groß gegenüber der Wellenlänge des eingestrahlten Lichts sind, erfolgt wieder ein Anstieg der Intensität des gestreuten Lichtes in der Aufnahmerichtung (und zwar quadratisch mit der Teilchengröße).

Wenn nun beispielsweise aufgrund von Ablagerungen von Partikeln an der Innenseite des Probenrohres die austretende Streustrahlung geschwächt wird (und auch gegebenenfalls die eingestrahlte Strahlung), so sinkt die Intensität der empfangenen Streustrahlung ab und es ergibt sich eine Kurve V, die im Wesentlichen äquidistant (in Ordinatenrichtung) unterhalb einer Normintensitätskurve N verläuft (Fig. 2).

Bei der durch den Analog-Digital-Wandler 10 vorgesehenen Digitalisierung der Intensitätswerte werden diese in einem gewissen Bereich einer vorgegebenen Vielzahl von Kanälen zugeordnet, beispielsweise 256 Kanälen (entsprechend 2⁸ bzw. einem 8 Bit oder 1 Byte langen "Wort"); es kann auch eine geringere Anzahl von Kanälen vorgesehen werden. Im Bereich des oben beschriebenen "Mie-Plateaus" oder der Mie-Abflachung ist die Größenauflösung der Erfassung oder Detektion der Partikel gering, d.h. Partikel in einem größeren Größen-Bereich werden einem Kanal zugeordnet, als dies unterhalb und oberhalb der Abflachung der Fall ist, so dass alleine aus diesem Grund in dem entsprechenden Normkanal ein größerer Anteil an Partikelerfasst wird, als es der tatsächlichen Größenverteilung entspricht.

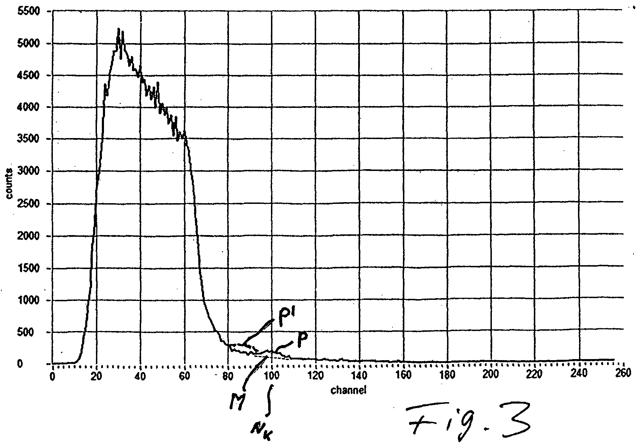

Auf der rechten Ordinate in der Fig. 2 sind den jeweiligen Streuintensitäten die diese erfassenden - digitalen - Messkanäle zugeordnet, die den in der Fig. 3 auf der Abszisse angegebenen Kanälen entsprechen. Gemessen wird die Häufigkeit von Streulichtimpulsen (einzelner Teilchen) jeweils einer bekannten Intensität im zugeordneten Kanal (als Maß der Größe des Teilchens), wobei die Zählzahl in jedem Kanal dann ein Maß der Zahl der Partikel der entsprechenden Größe ist.

Die Fig. 3 zeigt ein Messdiagramm eines digitalen Feinstaubmesssystems, bei dem Partikel verschiedener Größe in einer natürlichen oder üblichen Verteilung und damit mit einer größeren Anzahl von kleinen Partikeln und einer geringeren Anzahl von größeren Partikeln vorliegen. Der Abfall der Häufigkeit des Auftretens von der Anzahl der kleinen Partikel zu der der großen Partikel geschieht plausiblerweise monoton mit der Teilchengröße. Aufgrund der Einzelstreuwerte werden diese entsprechend Fig. 2 jeweils in einen entsprechenden Kanal einklassifiziert. Die auf der Ordinate angegebene Anzahl oder Häufigkeit ergibt sich durch die Aufsummierung der einzelnen Messergebnisse für den jeweiligen Kanal über eine gewisse Zeit hin ergibt.

Dabei zeigt sich, dass die in Fig. 3 dargestellte Häufigkeitskurve im Bereich mindestens einer der Kanäle, in dem die Partikel erfasst werden, deren Größe im Bereich der Wellenlänge des eingestrahlten Lichts liegt, nicht den - wie oben gesagt - an sich zu erwartenden monoton fallenden Verlauf (in der Fig. 3 mit M gestrichelt dargestellt) aufweist, sondern dort vielmehr eine leichte Spitze oder einen leichten Peak aufweist - der kurz als "Mie-Peak" P - bezeichnet werden soll. Diese Spitze oder dieser Peak ist alleine durch den unter Bezug auf die Abflachung oder das "Mie-Plateau" A der Fig. 2 dargestellten physikalischen Effekt des Streuverhaltens von Partikeln mit einer Größe im Bereich der Lichtwellenlänge bedingt.

Lagern sich nun Staubpartikel an der Innenseite des Proberohres ab, so wird, wie unter Bezug auf Fig. 2 dargelegt, die Streuintensität der Einzelstreuung von der dortigen Kurve N auf V reduziert, was dazu führt, dass der im Bereich der Abflachung A der Kurve der Fig. 2 bedingte Mie-Peak P der Fig. 3 zu für die Erfassung von Partikelnkleinerer Größe vorgesehenen Kanälen als Peak P' wandert. Dies zeigt eine Dekalibrierung des Messsystems.

Die Abflachung A der Kalibrierkurve tritt in etwas abgeschwächter Form auch noch bei größeren Partikeldurchmessern auf und kann auch genutzt werden. Im Bereich der Wellenlänge des Lichtes ist dieser Effekt jedoch am stärksten ausgeprägt.

Diese wird erfindungsgemäß durch die Auswerteelektronik 11 erfasst, indem die erfasste Partikelanzahl in dem dem genannten "Mie-Peak" zugeordneten Normkanal K mit den Anzahlen in benachbarten Kanälen, insbesondere den unmittelbar benachbarten Kanälen für geringere Partikelgrößen untereinander verglichen werden. Wird beispielsweise festgestellt, dass die Partikelanzahl im Kanal Nₖ nicht mehr größer ist als die im Kanal Nₖ₋₁, dafür aber die im Kanal Nₖ₋₁ größer als die im Kanal Nₖ₋₂, so können einerseits die entsprechenden Werte an der Anzeige- und Bedieneinheit 12 angezeigt werden und dem Operator die Informationen für ein manuelles Handeln geben. Auch können beim automatischen Vergleich bei den genannten Abweichungen von den Normwerten akustische oder optische Warnsignale ausgegeben werden; darüber hinaus kann eine Rückwirkung auf den Verstärker oder auf die Beleuchtungsintensität der Lichtquelle auf den Verstärker 9 oder auch die Beleuchtungsintensität der Lichtquelle 2 erfolgen, um eine Rekalibrierung wieder herzustellen, d.h. es erfolgt eine Verstärkung so lange, bis der Mie-Peak P wieder im Normkanal Nₖ liegt. Eine automatische elektronische Rekalibrierung in dieser Weise kann nur in einem gewissen engen Bereich erfolgen. Dies kann auch durch einen Operateur manuell geschehen. Wenn die Abweichungen zu groß werden, so ist eine Reinigung des Probenrohres veranlasst.

## Patentansprüche

1. Verfahren zum Untersuchen kleiner Partikel in Gas, wobei die Partikel mit Licht bestrahlt werden, von den Partikeln gestreutes Licht detektiert, das gewonnene elektrische Signal verstärkt, digitalisiert und entsprechend der die Partikelgröße repräsentierenden Intensität in einer Vielzahl von digitalen Kanälen als Häufigkeitsverteilung erfasst werden,
**dadurch gekennzeichnet, dass** das Auftreten einer Spitze, des "Mie-Peaks" (P), in der gemessenen größenabhängigen Häufigkeitsverteilung überwacht wird und bei Auftreten dieses Mie-Peaks (P) in einem oder mehreren anderen als dem oder den ihm aufgrund der Messeinstellungen zukommenden mindestens einen digitalen Normkanal eine Meldung ausgegeben wird.

2. Verfahren nach Anspruch 1, **dadurch gekennzeichnet, dass** die Partikel mit schmalbandigem farbigem Licht, insbesondere einer blaues Licht emittierenden Diode, bestrahlt werden.

3. Verfahren nach Anspruch 1 oder 2, **dadurch gekennzeichnet, dass** die Partikel mit Licht mit einer Bandbreite von ± 100 nm, vorzugsweise ± 50 nm, um eine Mittelwellenlänge des Lichts bestrahlt werden, wobei die Mittelwellenlänge insbesondere im blauen Bereich liegt.

4. Verfahren nach einem der vorangehenden Ansprüche, **dadurch gekennzeichnet, dass** bei Abweichen des Mie-Peaks (P) von dem mindestens einen Normkanal ein die Rekalibrierung der Messeinrichtung bewirkender Vorgang erfolgt.

5. Verfahren nach Anspruch 4, **dadurch gekennzeichnet, dass** der Verstärkungsfaktor des analogen Verstärkers definiert erhöht wird, so der Mie-Peak (P) wieder in dem mindestens einen Normkanal erscheint.

6. Verfahren nach Anspruch 4 oder 5, **dadurch gekennzeichnet, dass** die Lichtintensität der lichtemittierenden Diode definiert erhöht wird, so dass der Mie-Peak (P) wieder in dem mindestens einen Normkanal erscheint.

7. Verfahren nach einem der Ansprüche 4 bis 5, **dadurch gekennzeichnet, dass** eine Reinigung des Messrohres erfolgt.

8. Verfahren nach einem der Ansprüche 4 bis 7 **dadurch gekennzeichnet, dass** die Rekalibrierung automatisch durchgeführt wird.

9. Vorrichtung zum Untersuchen kleiner Partikel in Gas, wobei die Partikel mit Licht bestrahlt werden, von den Partikeln gestreutes Licht detektiert, das gewonnene elektrische Signal verstärkt, digitalisiert und entsprechend der die Partikelgröße repräsentierenden Intensität in einer Vielzahl von digitalen Kanälen als Häufigkeitsverteilung erfasst werden, **gekennzeichnet durch** eine Einrichtung, die zum Überwachen des Auftretens einer Spitze, des "Mie-Peaks" (P), in der gemessenen größenabhängigen Häufigkeitsverteilung und zum Ausgeben einer Meldung bei Auftreten des Mie-Peaks in einem anderen als dem ihm aufgrund der Messeinstellungen zukommenden mindestens einen digitalen Normalkanal ausgebildet ist.

10. Vorrichtung nach Anspruch 9, **gekennzeichnet durch** ein Proberohr (1), eine dieses bestrahlende Lichtquelle (2), einen Detektor (8) zur Detektion von an den Partikeln gestreutem Streulicht, einen Analogverstärker (9), einen Analog-Digital-Wandler (10), eine Auswerteeinheit (11) und eine Anzeige- und Bedieneinheit (12), **dadurch** gekennzeichnet, dass die Auswerteeinheit (11) zum Erfassen des Mie-Peaks (P) in der gemessenen Häufigkeitsverteilung und zum Zuordnen desselben zu mindestens einem digitalen Erfassungskanal (Normalkanal) ausgebildet ist.

11. Vorrichtung nach Anspruch 9 oder 10, **dadurch gekennzeichnet, dass** eine Lichtquelle (2) farbiges Licht aussendet, insbesondere eine blaues Licht emittierende LED ist.

12. Vorrichtung nach einem der Ansprüche 9 bis 11, **gekennzeichnet durch** eine optische oder akustische Signaleinrichtung zur Anzeige des Mie-Peaks (P) in einem anderen als dem mindestens einen vorgegebenen Normkanal.

13. Vorrichtung nach einem der Ansprüche 9 bis 12, **gekennzeichnet durch** einen Rückkopplungsweg (13) zur Rekalibrierung **durch** Erhöhung des Verstärkungsfaktors des Analogverstärkers (9) so weit, dass der Mie-Peak (P) wieder in dem mindestens einen vorgegebenen Normkanal auftritt.

14. Vorrichtung nach einem der Ansprüche 9 bis 13, **gekennzeichnet durch** einen Rückkopplungsweg (13) zur Rekalibrierung **durch** Erhöhung der Leuchtstärke des Lichtsenders (2) so weit, dass der Mie-Peak (P) wieder in dem mindestens einen vorgegebenen Normkanal auftritt.

## Claims

1. Method for investigating small particles in gas, the particles being irradiated with light, light scattered by the particles being detected, the electrical signal obtained being amplified, digitized and, according to the intensity representing the particle size, detected in a multiplicity of digital channels as a frequency distribution,
**characterized in that** the occurrence of a peak, the "Mie peak" (P), in the measured size-dependent frequency distribution is monitored and a message is output if this Mie peak (P) occurs in one or more digital channels other than the standard channel or channels belonging to said peak on the basis of the measurement settings.

2. Method according to Claim 1, **characterized in that** the particles are irradiated with narrowband coloured light, in particular a blue-light emitting diode.

3. Method according to Claim 1 or 2, **characterized in that** the particles are irradiated with light with a bandwidth of ± 100 nm, preferably ± 50 nm, about a mean wavelength of the light, the mean wavelength lying in particular in the blue range.

4. Method according to one of the preceding claims, **characterized in that**, if the Mie peak (P) deviates from the at least one standard channel, an operation bringing about the recalibration of the measuring device is performed.

5. Method according to Claim 4, **characterized in that** the gain factor of the analogue amplifier is increased in a defined manner such that the Mie peak (P) appears again in the at least one standard channel.

6. Method according to Claim 4 or 5, **characterized in that** the light intensity of the light-emitting diode is increased in a defined manner such that the Mie peak (P) appears again in the at least one standard channel.

7. Method according to either of Claims 4 and 5, **characterized in that** a cleaning of the measuring tube is performed.

8. Method according to one of Claims 4 to 7, **characterized in that** the recalibration is carried out automatically.

9. Apparatus for investigating small particles in gas, the particles being irradiated with light, light scattered by the particles being detected, the electrical signal obtained being amplified, digitized and, according to the intensity representing the particle size, detected in a multiplicity of digital channels as a frequency distribution, **characterized by** a device which is designed for monitoring the occurrence of a peak, the "Mie peak" (P), in the measured size-dependent frequency distribution and for outputting a message if the Mie peak occurs in a digital channel other than the at least one standard channel belonging to said peak on the basis of the measurement settings.

10. Apparatus according to Claim 9, **characterized by** a sample tube (1), a light source (2) irradiating said sample tube, a detector (8) for detecting scattered light scattered at the particles, an analogue amplifier (9), an analogue-digital converter (10), an evaluation unit (11) and an indicating and operating unit (12), **characterized in that** the evaluation unit (11) is designed for detecting the Mie peak (P) in the measured frequency distribution and for assigning the same to at least one digital detection channel (standard channel).

11. Apparatus according to Claim 9 or 10, **characterized in that** a light source (2) emits coloured light, in particular is a blue-light emitting LED.

12. Apparatus according to one of Claims 9 to 11, **characterized by** an optical or acoustic signal device for indicating the Mie peak (P) in a channel other than the at least one prescribed standard channel.

13. Apparatus according to one of Claims 9 to 12, **characterized by** a feedback path (13) for recalibration by increasing the gain factor of the analogue amplifier (9) to the extent that the Mie peak (P) occurs again in the at least one prescribed standard channel.

14. Apparatus according to one of Claims 9 to 13, **characterized by** a feedback path (13) for recalibration by increasing the luminosity of the light emitter (2) to the extent that the Mie peak (P) occurs again in the at least one prescribed standard channel.

## Revendications

1. Procédé d'analyse de petites particules en phase gazeuse, les particules étant irradiées avec de la lumière, la lumière diffusée par les particules détectée, le signal électrique reçu amplifié, numérisé et détecté dans une pluralité de canaux numériques servant de répartition de fréquences en fonction de l'intensité représentant l'ordre de grandeur des particules, **caractérisé en ce que** la survenue d'un point culminant, appelé « Mie-Peak » (P), dans la répartition de fréquences dépendant de l'ordre de grandeur mesurée est surveillée et qu'un message est envoyé, en cas de survenue de ce point culminant Mie-Peak (P), dans un autre canal normalisé numérique au moins associé sur la base des réglages de mesure.

2. Procédé selon la revendication 1, **caractérisé en ce que** les particules sont irradiées avec une lumière colorée à bande étroite, notamment avec une diode émettant de la lumière bleue.

3. Procédé selon la revendication 1 ou 2, **caractérisé en ce que** les particules sont irradiées de lumière avec une largeur de bande de ± 100 nm, de préférence ± 50 nm, autour d'une longueur d'onde moyenne de la lumière, la longueur d'onde moyenne se trouvant notamment dans la zone bleue.

4. Procédé selon l'une quelconque des revendications précédentes, **caractérisé en ce que** lorsque l'on s'écarte du point culminant Mie-Peak (P) de l'au moins un canal normalisé, un processus entraînant le réétalonnage du dispositif de mesure est effectué.

5. Procédé selon la revendication 4, **caractérisé en ce que** le facteur d'amplification de l'amplificateur analogique est augmenté de façon définie de sorte que le point culminant Mie-Peak (P) apparaisse de nouveau dans l'au moins un canal normalisé.

6. Procédé selon la revendication 4 ou 5, **caractérisé en ce que** l'intensité lumineuse de la diode émettant de la lumière est augmentée de façon définie, de sorte que le point culminant Mie-Peak (P) apparaisse de nouveau dans l'au moins un canal normalisé.

7. Procédé selon l'une quelconque des revendications 4 à 5, **caractérisé en ce que** l'on effectue un nettoyage du tube de mesure.

8. Procédé selon l'une quelconque des revendications 4 à 7, **caractérisé en ce que** le réétalonnage est réalisé automatiquement.

9. Dispositif d'analyse de petites particules en phase gazeuse, les particules étant irradiées avec de la lumière, la lumière diffusée par les particules détectée, le signal électrique reçu amplifié, numérisé et détecté dans une pluralité de canaux numériques servant de répartition de fréquences en fonction de l'intensité représentant l'ordre de grandeur des particules, **caractérisé par** un dispositif réalisé pour surveiller la survenue d'un point culminant, appelé « Mie-Peak » (P), dans la répartition de fréquences dépendant de l'ordre de grandeur mesurée et pour envoyer un message en cas de survenue de ce point culminant Mie-Peak (P), dans un autre canal normalisé numérique au moins associé sur la base des réglages de mesure.

10. Dispositif selon la revendication 9, **caractérisé par** un tube d'essai (1), une source lumineuse (2) irradiant ce tube, un détecteur (8) servant à la détection de la lumière diffusée au niveau des particules, un amplificateur analogique (9), un convertisseur analogique-numérique (10), une unité d'analyse (11) et une unité d'affichage et de commande (12), **caractérisé en ce que** l'unité d'analyse (11) est réalisée pour détecter le point culminant Mie-Peak (P) dans la répartition de fréquences mesurée et pour associer celui-ci à au moins un canal de détection numérique (canal normalisé).

11. Dispositif selon la revendication 9 ou 10, **caractérisé en ce qu'**une source lumineuse (2) émet de la lumière colorée, notamment une DEL émettant de la lumière bleue.

12. Dispositif selon l'une quelconque des revendications 9 à 11, **caractérisé par** un dispositif de signal optique ou acoustique servant à l'affichage du point culminant Mie-Peak (P) dans un canal normalisé autre que l'au moins un canal prédéfini.

13. Dispositif selon l'une quelconque des revendications 9 à 12, **caractérisé par** une voie de rétroaction (13) prévue pour le réétalonnage par augmentation du facteur d'amplification de l'amplificateur analogique (9) jusqu'à ce que le point culminant Mie-Peak (P) se situe de nouveau dans l'au moins un canal normalisé prédéfini.

14. Dispositif selon l'une quelconque des revendications 9 à 13, **caractérisé par** une voie de rétroaction (13) prévue pour le réétalonnage par augmentation de la puissance d'éclairage de l'émetteur de lumière (2) jusqu'à ce que le point culminant Mie-Peak (P) se situe de nouveau dans l'au moins un canal normalisé prédéfini.
